# EUROPÄISCHE PATENTSCHRIFT

(11) **EP 4 090 492 B1**
(45) Veröffentlichungstag und Bekanntmachung des Hinweises auf die Patenterteilung: **26.06.2024**
(21) Anmeldenummer: 21712067.4
(22) Anmeldetag: 10.03.2021
(51) Int. Cl.: B23K 26/24, B23K 26/60, B23K 33/00

(54) **VERFAHREN ZUM STUMPFSCHWEISSEN VON WENIGSTENS ZWEI BLECHEN**
METHOD FOR BUTT WELDING AT LEAST TWO METAL SHEETS
PROCÉDÉ DE SOUDAGE BOUT À BOUT D'AU MOINS DEUX FEUILLES MÉTALLIQUES

(30) Priorität: 10.03.2020 DE 102020106530
(43) Veröffentlichungstag der Anmeldung: 23.11.2022
(73) Patentinhaber: Baosteel Lasertechnik GmbH, 88212 Ravensburg (DE)
(72) Erfinder: ALBER, Gerhard, 88276 Berg (DE); BRAUCHLE, Gerhard, 88239 Wangen (DE); RETZBACH, Martin, 88276 Berg (DE)
(74) Vertreter: Otten, Roth, Dobler & Partner mbB Patentanwälte
(86) Internationale Anmeldenummer: PCT/EP2021/056006
(87) Internationale Veröffentlichungsnummer: WO 2021/180767

(56) Entgegenhaltungen:
- EP-A1- 0 326 994
- WO-A1-2008/138973
- WO-A2-00/51775
- DE-A1-102008 052 306
- US-A- 5 957 369

## Beschreibung

Die Erfindung betrifft ein Verfahren zum Stumpfschweißen von wenigstens zwei Blechen gemäß dem Oberbegriff des Anspruchs 1. Aus der WO 2008/138973 A1 ist ein Verfahren zum Herstellen von Tailored Blanks aus im Stumpfstoß durch Schweißen zu fügenden Blechen bekannt, wobei mindestens zwei kombinierte Laser-Schneid- und Schweißköpfe, die von mindestens zwei unabhängigen, jeweils unabhängigen Einheiten der Vorschubvorrichtung zugeordneten Armen getragen werden, simultan längs der für den Stumpfstoß herzustellenden Kanten der von einem werkstückträger gehaltenen Bleche verfahren werden und dabei die Kanten beschneiden und dass dann nach dem Zusammenführen der Bleche zum Stumpfstoß und Halten der Bleche durch den Werkstückträger die beiden kombinierten Laser-Schneid- und Schweißköpfe simultan längs den hergestellten, den Stumpfstoß bildenden Kanten der vom Werkstückträger gehaltenen Bleche verfahren werden und dabei die Schweißnaht in verschiedenen, aufeinanderfolgenden Abschnitten herstellen. Aus der EP0326994 ist ein Verfahren nach dem Oberbegriff des Anspruchs 1 bekannt.

Es ist Aufgabe der Erfindung, ein Verfahren zum Stumpfschweißen von wenigstens zwei Blechen zu entwickeln, durch welches eine hohe Qualität der erzeugten Schweißverbindungen sichergestellt ist und welches die Herstellung von Tailored Blanks mit geringem technischem Aufwand und somit effizient ermöglicht.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Das erfindungsgemäße Verfahren zum Stumpfschweißen von wenigstens zwei Blechen, nämlich einem ersten Blech und einem zweiten Blech, aus welchen insbesondere ein Tailored Blank hergestellt wird, sieht vor,
- dass in einem ersten Verfahrensschritt eine Fixierung des ersten Blechs in einer ersten Spanneinrichtung und eine Fixierung des zweiten Blechs in einer zweiten Spanneinrichtung durchgeführt wird,
- dass in einem zweiten Verfahrensschritt an dem ersten Blech eine erste zu verschweißenden Kante mittels Laserschneiden hergestellt wird,
- dass in einem dritten Verfahrensschritt an dem zweiten Blech eine zweite zu verschweißenden Kante mittels Laserschneiden hergestellt wird,
- dass der zweite und der dritte Verfahrensschritt insbesondere nacheinander oder gleichzeitig ausgeführt werden,
- dass in einem vierten Verfahrensschritt das erste Blech und das zweite Blech zur Durchführung eines Fügeprozesses für ein Fügen zueinander positionier werden,
- dass in einem fünften Verfahrensschritt das Fügen der beiden Bleche entlang eines durch die beiden Kanten gebildeten Stoßbereichs mittels Laserschweißen ausgeführt wird,
- dass das erste Blech und das zweite Blech in dem vierten Verfahrensschritt jeweils unter Beibehaltung einer Vorspannung, welche durch die in dem ersten Verfahrensschritt hergestellten Fixierung hervorgerufen wird, entweder durch ein Bewegen der ersten Spanneinrichtung oder durch ein Bewegen der zweiten Spanneinrichtung oder durch eine Bewegen der ersten Spanneinrichtung und der zweiten Spanneinrichtung derart zueinander positioniert werden, dass sich die zu verschweißende Kante des ersten Blechs und die zu verschweißende Kante des zweiten Blechs unter Ausbildung eines Stoßes gegenüber liegen.

Durch ein Beibehalten der Vorspannung, welche die beiden Bleche beim Laserschneiden bedingt durch eine Fixierung mittels einer Fixiervorrichtung aufweisen, für das Laserschweißen verbleiben die zu verschweißenden Kanten der beiden Bleche ihre Geometrie exakt, so dass die zu verschweißenden Kanten optimal zueinander passen. Entsprechend wird durch das erfindungsgemäße Verfahren vermieden, dass nach dem Laserschneiden dadurch eine Verformung der Bleche und damit der Kanten auftritt, dass sich beim Positionieren der Bleche für das Laserschweißen ein Spannungszustand der Bleche ändert.

Es ist auch vorgesehen, den zweiten, den dritten und den vierten Verfahrensschritt derart auszuführen, dass vor dem fünften Verfahrensschritt zwischen der zu verschweißenden ersten Kante und der zu verschweißenden zweiten Kante eine Nut ausgebildet wird. Hierdurch ist es möglich, eine durch das Laserschweißen erzeugte Schweißnaht oberflächenbündig herzustellen, so dass eine ungewünschte Überhöhung der Schweißnaht vermieden ist.

Weiterhin ist es vorgesehen, die Nut als eine V-Nut oder als eine Y-Nut oder als eine HV-Nut oder als eine HY-Nut auszubilden. Hierdurch kann die Auswahl der Form der Nut der jeweiligen Kombinationen von Material und Dicke der Bleche angepasst werden.

Es ist auch vorgesehen, dass bei dem zweiten Verfahrensschritt die Vorbereitung der ersten zu verschweißenden Kante mittels des Laserschneidens derart erfolgt, dass nach dem Laserschneiden zwischen der ersten Kante und einer an die erste Kante angrenzenden Oberseite des ersten Blechs ein Winkel > 90° eingeschlossen wird und dass bei dem dritten Verfahrensschritt die Vorbereitung der zweiten zu verschweißenden Kante mittels des Laserschneidens derart erfolgt, dass nach dem Laserschneiden zwischen der zweiten Kante und einer an die zweite Kante angrenzenden Oberseite des zweiten Blechs ein Winkel > oder = 90° eingeschlossen wird. Hierdurch ist sichergestellt, dass zwischen den Belchen nach einem Aneinanderschieben der geschnittenen Kanten eine Nut mit einem V-förmigen Querschnitt ausgebildet wird, welche als Aufnahmeraum für das Schmelzvolumen dient und somit eine Ausbildung einer überhöhten Schweißnaht verhindert.

Weiterhin ist es vorgesehen, dass nach dem vierten Verfahrensschritt das erste Blech und das zweite Blech derart orientiert sind, dass eine an der ersten Kante erzeugte erste Schnittfläche in einer ersten Ebene liegt und eine an der zweiten Kante erzeugte zweite Schnittfläche in einer zweiten Ebene liegt, wobei sich die erste Ebene und die zweite Ebene schneiden, wenn eine Oberseite des ersten Blechs und eine Oberseite des zweiten Blechs in einer dritte Ebene oder in einer dritten Ebene und eine vierten Ebene, welche parallelen zueinander ausgerichtet sind, liegen. Hierdurch ist eine parallele Ausrichtung der Ebenen, in welchen die Kanten liegen, verhindert und ein Aufnahmeraum für das Schmelzvolumen bereitgestellt.

Es ist auch vorgesehen, den zweiten und den dritten Verfahrensschritt mittels Laser-Strahl-Schneiden oder mittels Remote-Laser-Strahl-Schneiden (Remote Laser Beam Cutting - RLC) auszuführen und den fünften Verfahrensschritt mittels Laser-Strahl-Schweißen oder mittels Remote-Laser-Strahl-Schweißen (Remote Laser Beam Welding - RLW) auszuführen. Hierdurch ist ein einziger Remote-Laser ausreichend, um das erste Blech zu schneiden und das zweite Blech zu schneiden und die beiden Bleche miteinander zu verschweißen. Hierdurch sind kleinere Verfahrwege ausreichend, da der Remote_Laser den Fokus nach Bedarf umpositionieren kann.

Weiterhin ist es vorgesehen, dass der zweite und der dritte und der fünfte Verfahrensschritt mit demselben Laser oder mit demselben Remote-Laser ausgeführt werden. Hierdurch ist der technische Aufwand für eine Vorrichtung zur Herstellung von Tailored Blanks gegenüber anderen Vorrichtungen geringer, da nur ein Laser benötigt wird.

Es ist auch vorgesehen, dass ein Abstand zwischen dem Remote-Laser und der bzw. den zu verschweißenden Kanten der Bleche bei der Ausführung des zweiten, dritten und fünften Verfahrensschritts jeweils mindestens 200 mm und vorzugsweise mindestens 300 mm beträgt. Hierdurch lassen sich auch Bleche mit räumlich gebogenen Abschnitten besser schneiden und schweißen, da sich durch den erwähnten Abstand Kollisionen einfacher vermeiden lassen.

Es ist auch vorgesehen, das erste Blech im Bereich seiner ersten zu verschweißenden Kante und/oder das zweite Blech im Bereich seiner zweiten zu verschweißenden Kante vor dem fünften Verfahrensschritt und insbesondere vor den zweiten bzw. dritten Verfahrensschritt durch Laserablation mittels des Remote-Lasers zu behandeln. Hierdurch können die Bleche ohne zusätzlichen technischen Aufwand gereinigt werden und hierdurch kann das Ergebnis des Schweißverfahrens verbessert werden, das keine ungewünschten Stoffe in das Schmelzbad gelangen.

Weiterhin ist es auch vorgesehen, dass die Bleche in ihrer Anzahl und in ihrer Form derart ausgebildet sind, dass durch das Verfahren ein ringförmig geschlossenes Tailored Blank hergestellt wird, wobei das ringförmig geschlossene Tailored Blank insbesondere aus wenigstens sechs Blechen hergestellt wird. Zur Herstellung von Tailored Blanks mit mehr als zwei Schweißnähten wird das erfindungsgemäße Verfahren entweder mehrfach angewandt oder es erfolgen die einzelnen Verfahrensschritte parallel zueinander, dann ist die Vorrichtung zum Herstellen von Tailored Blanks entsprechend mit einer Vielzahl von Remote-Lasern und einer Vielzahl von Spanneinrichtungen ausgestattet.

Es ist auch vorgesehen, dass in dem vierten Verfahrensschritt das zweite Blech wahlweise derart gegenüber dem ersten Blech positioniert wird, dass zur Herstellung einer ersten Variante des Tailored Blanks eine Oberseite des ersten Blechs und eine Oberseite des zweiten Blechs in eine erste gemeinsame Ebene gebracht werden und die Nut hierbei zu der Oberseite des zweiten Blechs hin ausgebildet wird oder dass zur Herstellung einer zweiten Variante des Tailored Blanks eine Unterseite des ersten Blechs und eine Unterseite des zweiten Blechs in eine zweite gemeinsame Ebene gebracht werden und die Nut hierbei zu der Oberseite des zweiten Blechs hin ausgebildet wird. Auf diese Weise ist es möglich, allein durch eine unterschiedliche Positionierung der Schweißnaht und eine unterschiedliche Ausrichtung der Bleche zueinander "linke" und "rechte" Tailored Blanks herzustellen, ohne dass hierzu eine weitere Vorrichtung zur Herstellung von Tailored Blanks erforderlich ist.

Weiterhin ist es vorgesehen, ein Freivolumen der Nut derart vorzubestimmen, dass dieses durch eine Schweißnaht, welche in dem fünften Verfahrensschritt erzeugt wird, bis zu einer Grenzfläche gefüllt wird,
- wobei die Grenzfläche bei Blechen, deren Oberseiten in einer gemeinsamen Ebene liegen, durch diese gemeinsame Ebene definiert wird und wobei die Nut derart gefüllt wird, dass ein Füllvolumen der Schweißnaht dem Freivolumen der Nut entspricht oder
- wobei die Grenzfläche bei Blechen, deren Oberseiten auf unterschiedlichem Niveau liegen, als Grenzfläche ausgebildet ist, welche sich konkav gewölbt von der Oberseite des ersten Blechs zu der Oberseite des zweiten Blechs erstreckt, und wobei die Nut derart gefüllt wird, dass ein Füllvolumen der Schweißnaht über dem Freivolumen der Nut liegt.

Auf diese Weise lassen sich ohne zusätzliche Fertigungsschritte Tailored Blanks herstellen, welche optimal den Anforderungen genügen und insbesondere auch keine Nachbearbeitung im Bereich ihrer Schweißnaht erfordern.

Es ist auch vorgesehen, dass ein Füllvolumen der Schweißnaht im fünften Verfahrensschritt durch kontinuierliches Zuführen eines Zusatzdrahts während des Laserschweißens erhöht wird bis von dem Füllvolumen das Freivolumen der Nut erreicht wird. Hierdurch ist es möglich, auch Tailored Blanks mit größeren Freivolumen der Nut so herzustellen, dass das Freivolumen vollständig bis zu einer Obergrenze gefüllt ist und somit ein optimaler Zusammenhalt der Bleche gewährleistet ist.

Weiterhin ist es vorgesehen, mehrere Bleche zu einem Ring zu verbinden, wobei diese Bleche hierzu durch eine Anzahl von Schweißnähten verbunden werden, welche einer Anzahl der Bleche entspricht. Hierdurch lassen sich ringförmige Tailored Blanks rationell herstellen.

Es ist auch vorgesehen, dass die erste zu verschweißende Kante und die zweite zu verschweißende Kante jeweils einen linearen Verlauf aufweisen, so dass durch das Verschweißen eine linear verlaufende Schweißnaht gebildet wird. Hierdurch lassen sich flächige Tailored Blanks einfach herstellen.

Weiterhin ist es vorgesehen, dass die erste zu verschweißende Kante und die zweite zu verschweißende Kante jeweils einen zweidimensionalen, kurvenartigen Verlauf aufweisen, so dass durch das Verschweißen eine zweidimensional, kurvenartig verlaufende Schweißnaht gebildet wird. Hierdurch lassen sich flächige Tailored Blanks mit zweidimensionalen Verlauf der Schweißnaht einfach herstellen.

Schließlich ist es vorgesehen, dass die erste zu verschweißende Kante und die zweite zu verschweißende Kante jeweils einen raumkurvenartigen Verlauf aufweisen, so dass durch das Verschweißen eine raumkurvenartig verlaufende Schweißnaht gebildet wird. Hierdurch lassen sich komplexe Bauteile mit dreidimensionalem Verlauf der Schweißnaht einfach herstellen. Diese werden im Sinne der Erfindung auch als räumliche Tailored Blanks bezeichnet.

Im Sinne der Erfindung wird unter einem "Tailored Blank" ein Gegenstand verstanden, welcher durch Laserschweißen aus zwei Blechen gebildet wurde, welche sich bezüglich ihrer Materialdicken und/oder bezüglich ihres Materials und/oder bezüglich ihrer Form und bezüglich ihrer Beschichtung unterscheiden.

Im Sinne der Erfindung wird unter einem Blech ein blechförmiges Werkstück verstanden, welches aus einem schweißbaren Material besteht.

Im Sinne der Erfindung wird unter Stumpfschweißen ein Verschweißen von zwei Blechen im Bereich von aneinander stoßenden Kanten verstanden.

Im Sinne der Erfindung wir unter einer zu verschweißenden Kante eines Blechs eine zwischen einer Oberseite und einer Unterseite des Blechs verlaufende Kantenfläche verstanden, welche an eine Oberseite des Blechs angrenzt.

Im Sinne der Erfindung wird unter einem Remote-Laser, ein Laser verstanden, welcher ein Scannersystem umfasst, welches eine Kombination von rotierenden Facettenspiegeln oder verkippbaren Ablenkspiegeln umfasst, die den Laserstrahl durch eine Einstellbarkeit der Winkel, in welchen die Spiegel ausgerichtet sind, an unterschiedliche Orte reflektieren können.

Weitere Einzelheiten der Erfindung werden in der Zeichnung anhand von schematisch dargestellten Ausführungsbeispielen beschrieben.

Hierbei zeigt:
- Figur 1a bis 1i:: einen Ablauf des erfindungsgemäßen Verfahrens;
- Figur 2a bis 2c:: eine Ausführungsvariante zu den Verfahrensschritten 1g bis 1i;
- Figur 3a bis 3d:: zwischen unterschiedlich geschnittenen Blechen ausgebildete Nuten;
- Figur 4a bis 4d:: aus den in den Figuren 3a bis 3d gezeigten Blechen gebildete Tailored Blanks;
- Figur 5a, 5b:: ein erstes und ein zweites Blech mit jeweils einer zweidimensionale, kurvenartig verlaufenden Schnittkante;
- Figur 6a:: ein erstes und ein zweites Blech mit jeweils einer dreidimensionale verlaufenden Schnittkante;
- Figur 6b:: eine Schnittansicht zu der Figur 6a entsprechend dem Schnittverlauf VIa-VIa;
- Figur 7a bis 7c:: einen Verfahrensablauf zur Herstellung einer ersten Ausführungsvariante eines Tailored Blanks;
- Figur 8a bis 8c:: einen Verfahrensablauf zur rationellen Herstellung von zweit Ausführungsvariante eines Tailored Blanks und
- Figur 9:: eine Draufsicht auf ein teilweise fertiggestelltes ringförmiges Tailored Blank.

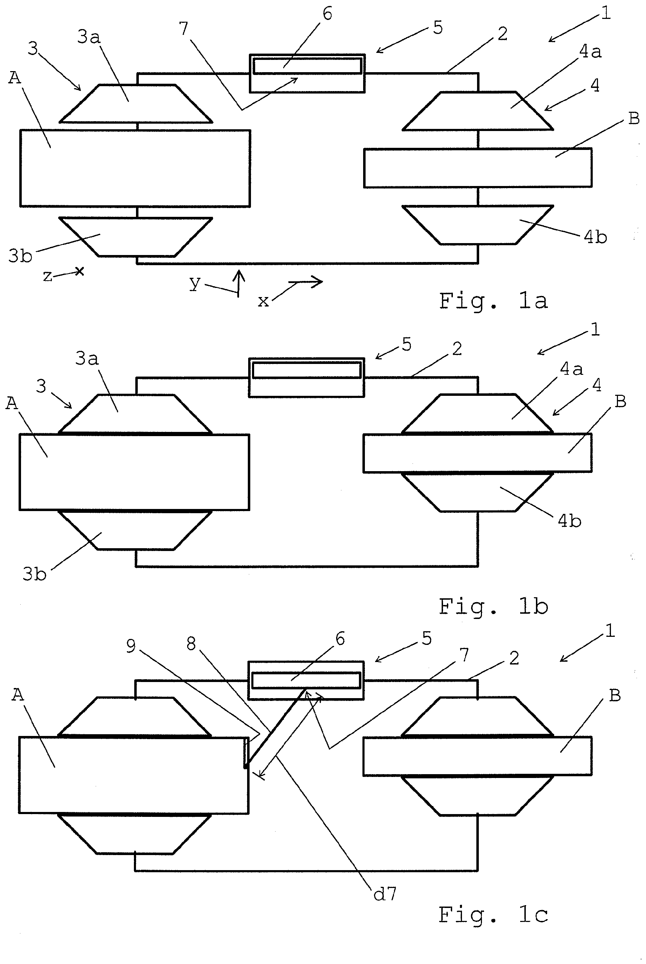

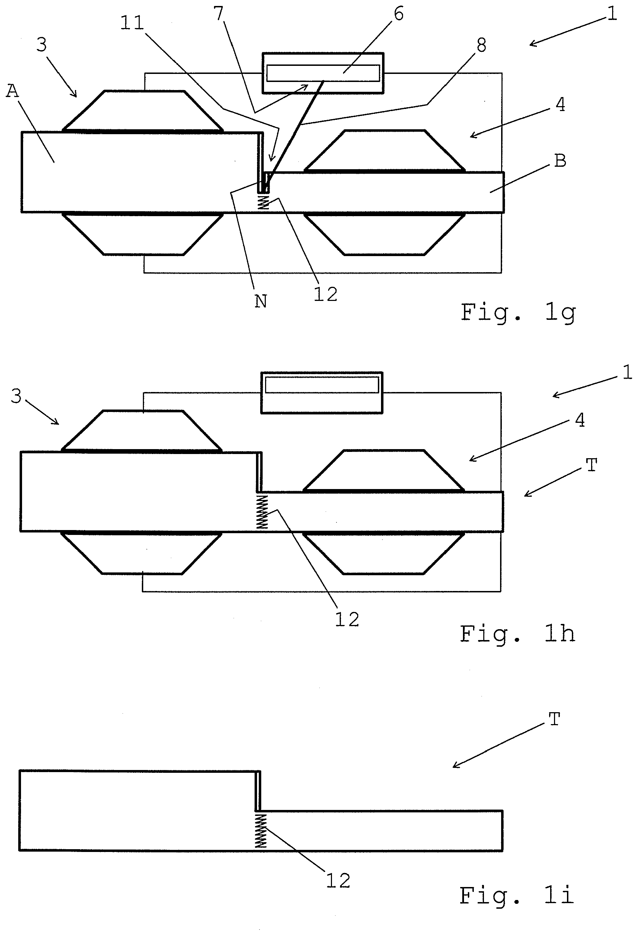

In den Figuren 1a bis 1i ist einen Ablauf des erfindungsgemäßen Verfahrens anhand schematischer Darstellungen gezeigt. Das erfindungsgemäße Verfahren dient zum Stumpfschweißen von wenigstens zwei Blechen A, B (siehe z.B. Figur 1a), nämlich dem ersten Blech A und dem zweiten Blech B. Im Ausführungsbeispiel unterscheiden sich die beiden Blech A, B bezüglich ihres Materials, somit dient die Anlage zur Herstellung von Tailored Blanks T (siehe Figuren 1h und 1i). Das erfindungsgemäße Verfahren wird mit einer Vorrichtung 1 zur Herstellung von Tailored Blanks T ausgeführt.

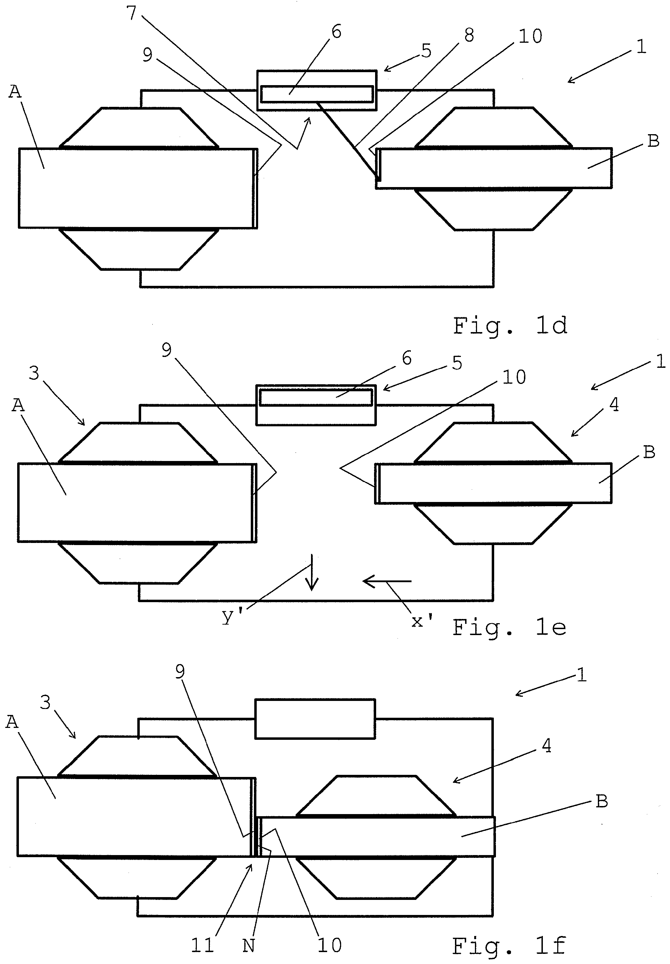

Die in den Figuren 1a bis 1h jeweils in schematischer Draufsicht gezeigte Vorrichtung 1 umfasst eine Basis 2, eine erste Spanneinrichtung 3, eine zweite Spanneinrichtung 4 und eine Lasereinrichtung 5. Die erste Spanneinrichtung 3 umfasst eine erste Spannbacke3a und eine zweite Spannbacke 3b. Die zweite Spanneinrichtung 4 umfasst eine erste Spannbacke 4a und eine zweite Spannbacke 4b. Die Spanneinrichtungen 3, 4 sind unabhängig voneinander auf der Basis 2 in der Zeichnungsebene in zwei Richtungen x, y verfahrbar. Zusätzlich ist auch die Verfahrbarkeit wenigstens einer der Spanneinrichtungen 3, 4 senkrecht zu der Zeichnungsebene in Richtung z vorgesehen. Weiterhin sind auch die Spannbacken 3a, 3b und 4a, 4b zueinander verfahrbar. Die Lasereinrichtung 5 umfasst einen Kopf 6, in welchem ein Remote-Laser 7 aufgenommen ist. Hierbei ist der Kopf 6 relativ zu der Basis 2 in allen Raumrichtungen x, y, z verfahrbar. Hierbei ist weiterhin ein von dem Remote-Laser 7 erzeugter Laserstrahl 8 (siehe Figur 1c, 1d, 1g) von dem Remote-Laser 7 lenkbar.

In einem ersten Verfahrensschritt erfolgt eine Fixierung des ersten Blechs A in der ersten Spanneinrichtung 3 und eine Fixierung des zweiten Blechs B in der zweiten Spanneinrichtung 4 durch ein Zusammenfahren der jeweiligen Spannbacken 3a, 3b und 4am 4b. Hierzu wird auf die Figuren 1a und 1b verwiesen, wobei die Figur 1a die beiden Bleche A, B in einem eingelegten und noch ungespannten Zustand zeigt und wobei die Figur 1b die Bleche A, B in einem gespannten Zustand zeigt.

Wie es aus der Figur 1c ersichtlich ist wird in einem zweiten Verfahrensschritt an dem ersten Blech A eine erste zu verschweißenden Kante 9 mittels Laserschneidens hergestellt. Hierzu wird das erste Blech A von dem Laserstahl 8 des Remote-Lasers 7 derart geschnitten, dass die zu verschweißende Kante 9 ausgebildet wird. In der Darstellung der Figur 1c ist der Laserschnitt bereits fast über die halbe Strecke ausgeführt.

Wie es aus der Figur 1d weiter ersichtlich ist wird in einem dritten Verfahrensschritt an dem zweiten Blech B eine zweite zu verschweißenden Kante 10 mittels Laserschneidens hergestellt. Hierzu wird das erste Blech B von dem Laserstahl 8 des Remote-Lasers 7 derart geschnitten, dass die zu verschweißende Kante 10 ausgebildet wird. In der Darstellung der Figur 1d ist der Laserschnitt bereits über mehr als die halbe Strecke ausgeführt. Beim Laserschneiden wird zur Strahlführung auch der Kopf 6 der Lasereinrichtung 5 und mit diesem der Remote-Laser 7 bewegt, wobei der Remote-Laser 7 den Laserstrahl 8 ebenfalls lenken kann.

Es kann auch vorgesehen sein, den dritten Schritt vor dem zweiten Schritt auszuführen.

In der Darstellung der Figur 1e ist der Kopf 6 der Lasereinrichtung 5 wieder in seine Grundstellung zurückgefahren und ist der Laserstrahl abgeschaltet. Die Bleche A, B liegen sich mit ihren zu verschweißenden Kanten 9, 10 mit Abstand gegenüber.

In einem vierten Verfahrensschritt, welcher zwischen den in den Figuren 1e und 1f gezeigten Zuständen erfolgt, werden das erste Blech A und das zweite Blech B zur Durchführung eines Fügeprozesses so zueinander positionier werden, dass ein Fügen erfolgten kann. Hierzu wird im Ausführungsbeispiel das in der Spanneinrichtung 4 gespannte zweite Blech B mit der Spanneinrichtung 4 in x'-Richtung und in y'-Richtung bewegt bis dieses mit seiner Kante 10 an der Kante 9 unter Ausbildung einer Nut N in einem Stoßbereich 11 anliegt, welche über ihre Längserstreckung ausschließlich zueinander deckungsgleiche Querschnitte aufweist.

In einem fünften Verfahrensschritt wird dann das Fügen der beiden Bleche A, B entlang des durch die beiden Kanten 9, 10 gebildeten Stoßbereichs 11 durch Laserschweißen mittels des Remote-Lasers 7 ausgeführt. Hierzu wird der Laserstrahl 8 entlang des Stoßbereichs 11 durch die Nut N geführt. In der Darstellung der Figur 1g ist eine Schweißnaht 12 bereits knapp über die halbe Länge der Nut N erzeugt. In der Figur 1i ist dann das aus den Blechen A und B durch Schweißen erzeugte Tailored Blank T gezeigt, wobei die Schweißnaht 12 durch eine Zickzacklinie symbolisiert ist.

Wichtig ist, dass das erste Blech A und das zweite Blech B in dem vierten Verfahrensschritt jeweils unter Beibehaltung von Vorspannungen, welche durch die in dem ersten Verfahrensschritt mittels der Spanneinrichtungen vorgenommenen Fixierungen hervorgerufen werden, durch ein Bewegen wenigstens einer der Spanneinrichtungen derart zueinander positioniert werden, dass sich die zu verschweißende Kante 9 des ersten Blechs A und die zu verschweißende Kante 10 des zweiten Blechs B unter Ausbildung eines Stoßes 13, welcher die Nut N bildet, gegenüber liegen.

Der zweite, der dritte und der vierte Verfahrensschritt werden derart ausgeführt, dass vor dem fünften Verfahrensschritt zwischen der zu verschweißenden ersten Kante 9 und der zu verschweißenden zweiten Kante 10 die Nut N ausgebildet wird. Hierzu wird sowohl das erste Blech A als auch das zweite Blech B mittels des Laserstrahls 8 so geschnitten, dass sowohl die erste Kante 9 als auch die zweite Kante 10 als schräge Kante hergestellt wird.

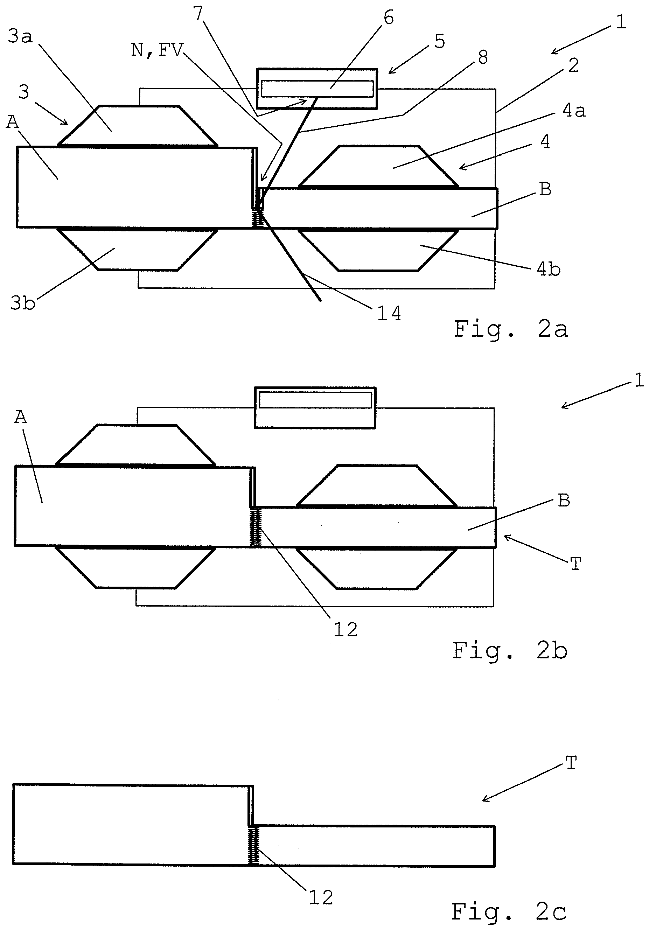

In den Figuren 2a bis 2c ist eine Ausführungsvariante zu dem an den Figuren 1a bis 1i erläuterten Verfahren schematisch dargestellt. Hierbei umfasst diese Ausführungsvariante die zu den Figuren 1a bis 1f erläuterten Verfahrensschritte. Entsprechend wird hierzu auf die oben stehende Beschreibung verwiesen. Abweichend von der oben erläuterten ersten Variante des Verfahrens erfolgt bei der zweiten Variante des Verfahrens ein Verschweißen des ersten Blechs A und des zweiten Blechs B unter Zuführung eines Zusatzdrahts 14, um - z.B. weil die Nut N durch einen anderen Schnittverlauf oder durch andere Dicken der Bleche A, B ein größeres Freivolumen FV aufweist - eine vollständige Füllung der Nut N durch den Laserschweißvorgang zu erreichen. In der Figur 2c ist dann analog zu der Figur 1i das aus den Spanneinrichtungen 3 und 4 der Vorrichtung 1 entnommene Tailored Blank 1 in Alleinstellung gezeigt.

Sowohl bei der ersten Verfahrensvariante als auch bei der zweiten Verfahrensvariante werden sowohl die beiden Laserschnitte als auch das Verschweißen mittels des einen Remote-Lasers 7 ausgeführt.

Alternativ ist es auch vorgesehen, die Spanneinrichtungen als magnetisch arbeitenden Spannvorrichtungen oder als pneumatisch arbeitende Spannvorrichtungen auszubilden.

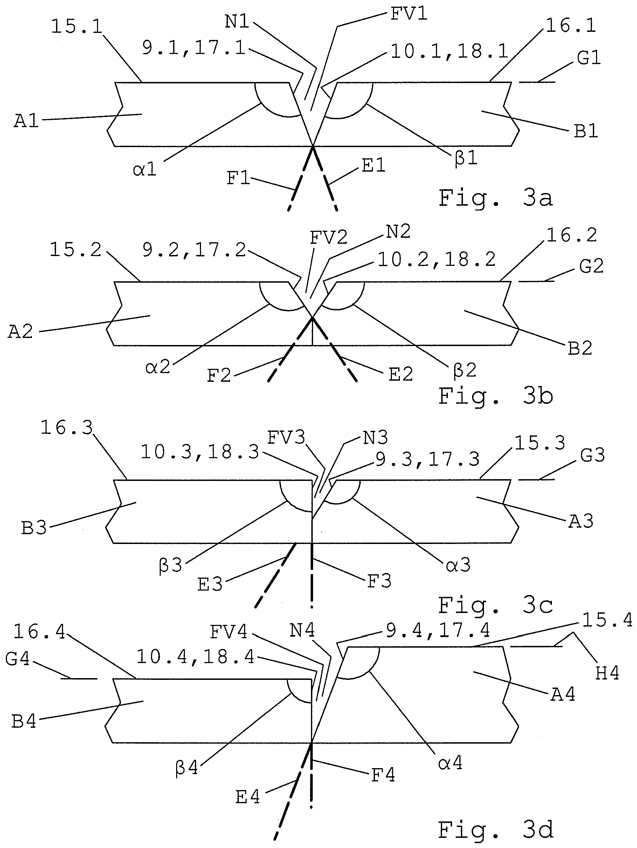

In den Figuren 3a bis 3d sind zwischen unterschiedlich geschnittenen ersten Blechen A1, A2, A3, A4 und zweiten Blechen B1, B2, B3, B4, zwischen welchen bereits ein Stoß 13.1, 13.2, 13.3, 13.4 hergestellt ist, Nuten N1, N2, N3 und N4 gezeigt. Diese ergeben sich, wenn die Bleche A1, B1 bzw. A2, B2 bzw. A3, B3 bzw. A4, B4 entsprechend einer der oben beschriebenen Verfahrensvarianten mit dem Remote-Laser zur Ausbildung von zu verschweißenden Kanten 9.1, 10.1 bzw. 9.2, 10.2 bzw. 9.3, 10.3 bzw. 9.4, 10.4 schräg geschnitten und anschließend unter Ausbildung der Nuten N1, N2, N3 und N4 zueinander positioniert werden. Hierbei wird dann abhängig von den ausgeführten Laserschnitten eine V-Nut N1 (siehe Figur 3a) oder eine Y-Nut N2 (siehe Figur 3b) oder eine HV-Nut N3 (siehe Figur 3c) oder eine HY-Nut N4 (siehe Figur 3d) gebildet. Die Nuten N1 bis N4 weisen jeweils ein Füllvolumen FV1, FV2, FV3 bzw. FV4 auf.

Für alle vier in den Figuren 3a bis 3d gezeigten Nutvarianten N1 bis N4 gilt,
- dass bei dem zweiten Verfahrensschritt die Vorbereitung der ersten zu verschweißenden Kante 9.1 bzw. 9.2 bzw. 9.3 bzw. 9.4 mittels des Laserschneidens derart erfolgt, dass nach dem Laserschneiden zwischen der ersten Kante 9.1 bzw. 9.2 bzw. 9.3 bzw. 9.4 und einer an die erste Kante 9.1 bzw. 9.2 bzw. 9.3 bzw. 9.4 angrenzenden Oberseite 15.1 bzw. 15.2 bzw. 15.3 bzw. 15.4 des ersten Blechs A1 bzw. A2 bzw. A3 bzw. A4 ein Winkel α1 bzw. α2 bzw. α3 bzw. α4 > 90° eingeschlossen wird,
- dass bei dem dritten Verfahrensschritt die Vorbereitung der zweiten zu verschweißenden Kante 10.1 bzw. 10.2 bzw. 10.3 bzw. 10.4 mittels des Laserschneidens derart erfolgt, dass nach dem Laserschneiden zwischen der zweiten Kante 10.1 bzw. 10.2 bzw. 10.3 bzw. 10.4 und einer an die zweite Kante 10.1 bzw. 10.2 bzw. 10.3 bzw. 10.4 angrenzenden Oberseite 16.1 bzw. 16.2 bzw. 16.3 bzw. 16.4 des zweiten Blechs B1 bzw. B2 bzw. B3 bzw. B4 ein Winkel β1 bzw. β2 bzw. β4 bzw. β4 > oder = 90° eingeschlossen wird.

Entsprechend gilt, dass nach dem vierten Verfahrensschritt das erste Blech A1, A2, A3, A4 und das zweite Blech B1, B2, B3, B4 derart orientiert sind, dass eine an der ersten Kante 9.1, 9.2, 9.3, 9.4 erzeugte erste Schnittfläche 17.1, 17.2, 17.3, 17.4 in einer ersten Ebene E1, E2, E3, E4 liegt und eine an der zweiten Kante 10.1, 10.2, 10.3, 10.4 erzeugte zweite Schnittfläche 18.1, 18.2, 18.3, 18.4 in einer zweiten Ebene F1, F2, F3, F4 liegt, wobei sich die erste Ebene und die zweite Ebene E1, F1 bzw. E2, F2 bzw. E3, F3 bzw. E4, F4 schneiden und somit nicht parallel zueinander liegen, wenn eine Oberseite 15.1, 15.2, 15.3, 15.4 des ersten Blechs A1, A2, A3, A4 und eine Oberseite 16.1, 16.2, 16.3, 16.4 des zweiten Blechs B1, B2, B3, B4 beide in einer dritte Ebene G1, G2, G3 liegen oder, wie in Fig. 3d dargestellt, in einer dritten Ebene G4 und eine vierten Ebene H4 liegen, wobei die Ebenen G4 und H4 parallelen zueinander ausgerichtet sind.

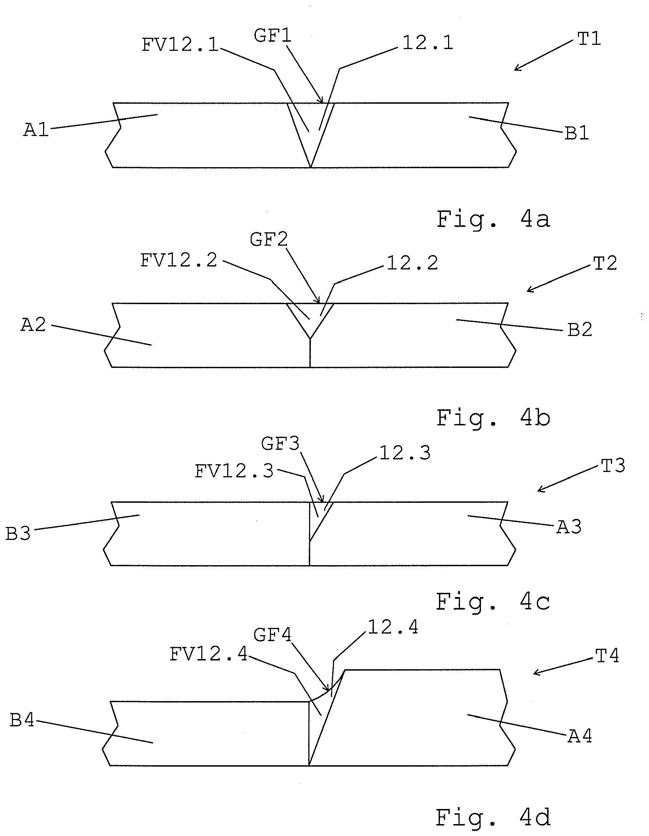

In den Figuren 4a bis 4d sind aus den aus den Figuren 3a bis 3d bekannten Blechen A1, A2, A3, A4 und B1, B2, B3 und B4 durch Verschweißen gebildete Tailored Blanks T1, T2, T3, T4 gezeigt. Schweißnähte 12.1, 12.2. 12.3 und 12.4 dieser Tailored Blanks T1, T2, T3, T4 sind so ausgeführt, dass diese ohne Nahtüberhöhung ausgebildet sind.

Bei den in den Figuren 3a, 4a und 3b, 4b und 3c, 4c gezeigten Varianten wird ein Freivolumen FV1, FV2, FV3 der Nut N1, N2, N3 jeweils derart vorbestimmt, dass dieses durch die Schweißnaht 12.1, 12.2, 12.3, welche in dem fünften Verfahrensschritt erzeugt wird, jeweils bis zu einer Grenzfläche GF1, GF2 bzw. GF3 gefüllt wird. Hierbei ist die Grenzfläche GF1, GF2, GF3 durch die Ebene G1, G2, G3 definiert wird und hierbei wird die Nut N1, N2, N3 derart gefüllt, dass ein Füllvolumen FV12.1, FV12.2, FV12.3 der Schweißnaht 12.1, 12.2, 12.3 einem jeweiligen Freivolumen FV1, FV2, FV3 der Nut N1; N2; N3; entspricht.

Bei der in den Figuren 3d, 4d gezeigten Variante wird ein Freivolumen FV4 der Nut N4 derart vorbestimmt, dass dieses durch eine Schweißnaht 12.4, welche in dem fünften Verfahrensschritt erzeugt wird, bis zu einer Grenzfläche GF4 gefüllt wird. Hierbei wird die Grenzfläche GF4 als Grenzfläche GF4 ausgebildet, welche sich konkav gewölbt von der Oberseite 15.4 des ersten Blechs A4 zu der Oberseite 16.4 des zweiten Blechs B4 erstreckt, wobei die Nut N4 derart gefüllt wird, dass ein Füllvolumen FV12.4 der Schweißnaht 12.4 über dem Freivolumen FV4 der Nut N4 liegt.

Wie zu den Figuren 1a bis 1i und 2a bis 2c erwähnt werden der zweite und der dritte Verfahrensschritt mittels Remote-Laser-Strahl-Schneiden - auch als Remote Laser Beam Cutting mit der Abkürzung RLC bezeichnet - mit dem Remote-Laser 7 ausgeführt und wird der fünfte Verfahrensschritt mittels Remote-Laser-Strahl-Schweißen - auch als Remote Laser Beam Welding mit der Abkürzung RLW bezeichnet - mit dem Remote-Laser 7 ausgeführt. Somit kommt derselbe Remote-Laser 7 bei der Herstellung der Tailored Blanks T dreimal zum Einsatz.

Ein Abstand d7 (siehe Figur 1c) zwischen dem Remote-Laser 7 und der zu verschweißenden Kante 9 des ersten Blechs A beträgt in Richtung des Laserstrahls 8 gemessen jeweils mindestens 200 mm und vorzugsweise mindestens 300 mm. Dies gilt für die Ausführung des zweiten, dritten und fünften Verfahrensschritts.

Bei allen beschriebenen Verfahrensvarianten ist es optional auch vorgesehen, dass das erste Blech A im Bereich seiner ersten zu verschweißenden Kante 9 und/oder das zweite Blech B im Bereich seiner zweiten zu verschweißenden Kante 10 vor dem fünften Verfahrensschritt und insbesondere vor den zweiten bzw. dritten Verfahrensschritt durch Laserablation mittels des Remote-Lasers 7 behandelt und hierdurch insbesondere gereinigt wird.

Bei den in den Figuren 1a bis 2c gezeigten Blechen A, B weisen die zu verschweißenden Kante 9, 10 einen linearen Verlauf auf, so dass durch das Verschweißen die linear verlaufende Schweißnaht 12 gebildet wird.

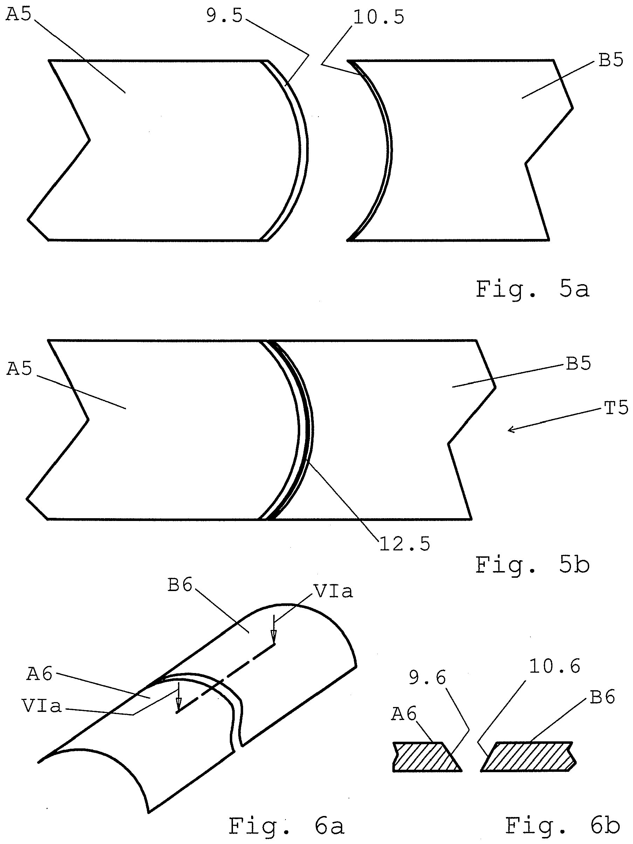

Bei in den Figuren 5a, 5b gezeigten Blechen A5, B5 weist eine erste zu verschweißende Kante 9.5 und eine zweite zu verschweißende Kante 10.5 nach dem Laserschneiden jeweils einen zweidimensionalen, kurvenartigen Verlauf auf, so dass durch das Verschweißen eine Tailored Blank T5 mit einer zweidimensional und kurvenartig verlaufenden Schweißnaht 12.5 gebildet wird.

Bei in den Figuren 6a, 6b gezeigten Blechen A6, B6 weist eine erste zu verschweißende Kante 9.6 und eine zweite zu verschweißende Kante 10.6 jeweils einen raumkurvenartigen Verlauf auf, so dass durch das Verschweißen eine raumkurvenartig verlaufende Schweißnaht gebildet wird. In der Figur 6 sind die Bleche A6 und B6 beabstandet zueinander gezeigt. Die Figur 6b zeigt einen Schnitt durch die Darstellung der Figur 6a entsprechend der Schnittlinie VIa-VIa. Durch Verschweißen wird aus den beiden Blechen A6 und B6 ein Bauteil hergestellt, welches eine raumkurvenartig verlaufende Schweißnaht aufweist. Derartige Bauteile werden im Sinne der Erfindung auch als räumliche Tailored Blanks bezeichnet.

Gemäß einer nicht dargestellten Ausführungsvariante des Verfahrens ist es auch vorgesehen, die Bleche in ihrer Anzahl und in ihrer Form derart auszubilden, dass durch das Verfahren ein ringförmig geschlossenes Tailored Blank hergestellt wird, wobei das ringförmig geschlossene Tailored Blank insbesondere aus wenigstens sechs Blechen hergestellt wird. Die Vorrichtung, an welcher dieses Verfahren ausgeführt wird, umfasst dann eine entsprechende Zahl von Spanneinrichtungen und ggf. eine der Zahl der Bleche entsprechende Zahl von Lasereinrichtungen. Alternativ kann auch eine Lasereinrichtung vorgesehen sein, welche das Laserschneiden und Laserschweißen aller Bleche vornimmt und hierzu entsprechend verfahren wird, wobei es auch vorgesehen sein kann, dass alternativ oder zusätzlich die Spanneinrichtungen verfahren werden, um die Lasereinrichtung und die Bleche in Position zueinander zu bringen. Bei einem derartigen Verfahren werden dann zur Herstellung eines Bauteils bzw. Tailored Blanks an diesem von derselben Lasereinrichtung mehrere Schweißnähte erzeugt. Durch ein derartiges Verfahren ist der Bauaufwand für eine Vorrichtung zur Herstellung derartiger Bauteile bzw. Tailored Blanks erheblich reduziert.

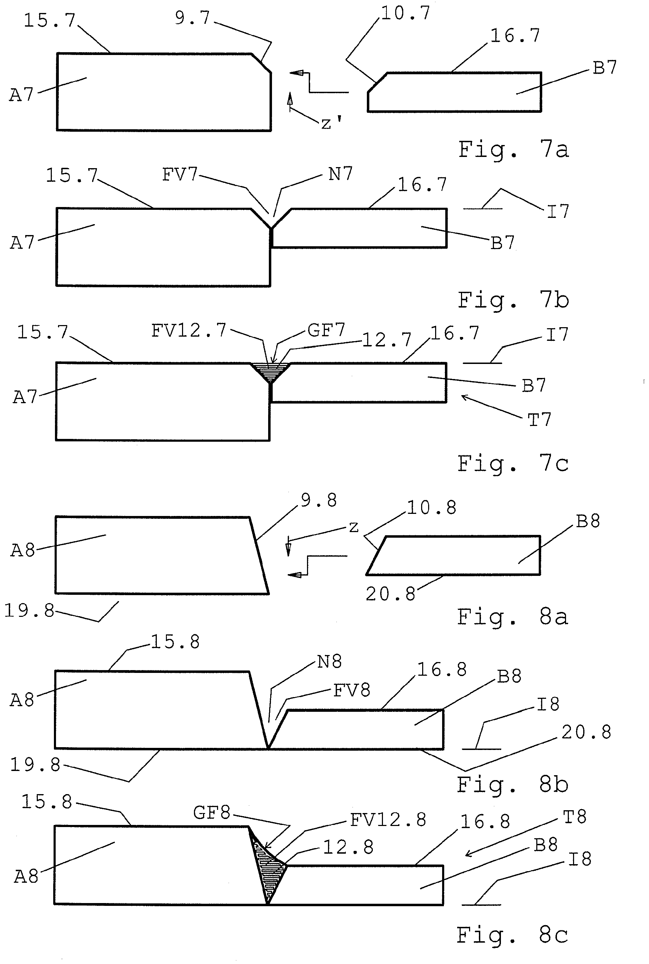

In den Figuren 7a bis 8c sind Verfahrensabläufe zur rationellen Herstellung von zwei Ausführungsvarianten eines weiteren Tailored Blanks beschrieben.

Hierzu ist es bei dem zu den Figuren 1a bis 1i beschriebenen Verfahren vorgesehen, dass in dem vierten Verfahrensschritt ein zweites Blech B7 bzw. B8, welches eine geringere Dicke als ein erste Blech A7 bzw. A8 aufweist, wahlweise derart gegenüber dem ersten Blech A7 bzw. A8 positioniert wird,
- dass zur Herstellung einer in der Figur 7c gezeigten ersten Variante eines Tailored Blanks T7 eine Oberseite 15.7 des ersten Blechs A7 und eine Oberseite 16.7 des zweiten Blechs B7 nach dem Laserschneiden in eine erste gemeinsame Ebene I7 gebracht werden und eine Nut N7 hierbei zu der Oberseite 16.7 des zweiten Blechs B7 hin ausgebildet wird oder
- dass zur Herstellung einer in der Figur 8c gezeigten zweiten Variante eines Tailored Blanks T8 eine Unterseite 19.8 eines ersten Blechs A8 und eine Unterseite 20.8 eines zweiten Blechs B8 in eine zweite gemeinsame Ebene I8 gebracht werden und eine Nut N8 hierbei zu einer Oberseite 15.8 bzw. 16.8 des ersten bzw. des zweiten Blechs B8 hin ausgebildet wird.

Um die Bleche A7, B7 bzw. A8, B8 zueinander zu positionieren wird wenigstens eine der nicht dargestellten Spanneinrichtungen, in welche die Bleche während allen Laserbearbeitungsschritten eingespannt sind, zusätzlich in die oben erwähnte, dritte Raumrichtung z bzw. z` verfahren.

Hierbei erfolgt ein Laserschneiden des ersten Blechs A7 und des zweiten Blechs B7 zur Ausbildung von Kanten 9.7 und 10.7 derart, dass zwischen den Blechen A7, A8 nach dem Laserschweißen als Schweißnaht 12.7 eine Y-Naht ausgebildet ist.

Hierbei erfolgt ein Laserschneiden des ersten Blechs A8 und des zweiten Blechs B8 zur Ausbildung von Kanten 9.8 und 10.8 derart, dass zwischen den Blechen A8, B8 nach dem Laserschweißen jeweils als Schweißnaht 12.8 eine V-Naht ausgebildet ist.

Grundsätzlich ist es für alle Ausführungsvarianten von Tailored-Blanks vorgesehen, dass - wie z.B. in den Figuren 7c und 8c gezeigt - ein Freivolumen FV7 bzw. FV8 der Nut N7 bzw. N8 derart vorbestimmt wird, dass dieses durch die Schweißnaht 12.7 bzw. 12.8, welche in dem fünften Verfahrensschritt erzeugt wird, bis zu einer Grenzfläche gefüllt wird, wobei die Grenzfläche durch die Oberseite 16.7 bzw. 16.8 des dünneren Blechs B7 bzw. B8 der zu verschweißenden Bleche A7, B7 bzw. A8, B8 definiert wird und wobei die Nut N7 bzw. N8 derart gefüllt wird, dass ein Füllvolumen FV12.7 bzw. FV12.8 der Schweißnaht 12.7 bzw. 12.8 dem Freivolumen FV7 bzw. FV8 der Nut N7 bzw. N8 entspricht. Abhängig von dem Freivolumen der jeweiligen Nut kann das Füllvolumen durch Verwendung eines Zusatzdrahts beim Laserschweißen bei Bedarf so erhöht werden, dass das Füllvolumen dem Freivolumen entspricht.

Sofern ein Laserschweißen mit Zusatzdraht vorgesehen ist, wird dies bei der Vorbestimmung des Freivolumens der Nut beachtet und das Freivolumen der Nut entsprechend größer bemessen. Entsprechend wird ein Füllvolumen der Schweißnaht im fünften Verfahrensschritt durch kontinuierliches Zuführen eines Zusatzdrahts während des Laserschweißens erhöht bis von dem Füllvolumen das Freivolumen der Nut erreicht wird.

Grundsätzlich ist es bei allen beschriebenen Verfahrensvarianten vorgesehen, dass die erste Spanneinrichtung 3 und/oder die zweite Spanneinrichtung 4 auf der Basis von zu einem ersten Laserschnitt an dem ersten Blech A, A1 bis A8 und zu einem zweiten Laserschnitt an dem zweiten Blech B, B1 bis B8 erfassten Koordinaten zueinander ausgerichtet werden.

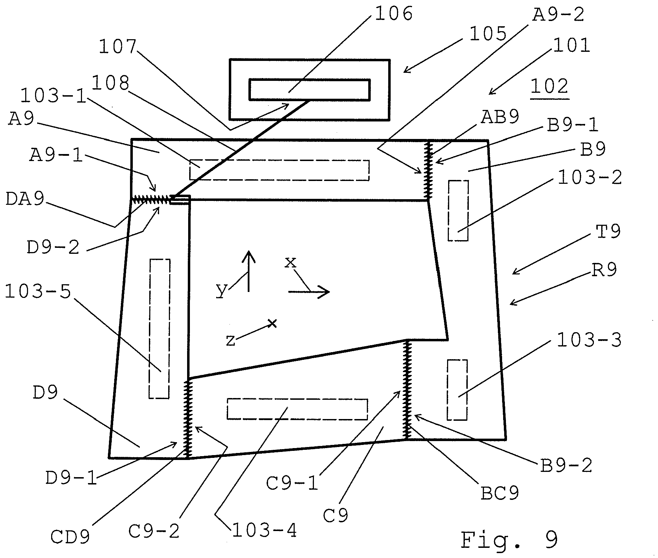

In der Figur 9 ist eine Draufsicht auf ein teilweise fertiggestelltes ringförmiges Tailored Blank T9 gezeigt. Das ringförmige Tailored Blank wird aus vier Blechen A9, B9, C9, D9 durch Stumpfschweiß dieser Bleche A9, B9, C9, D9 hergestellt. Die Bleche A9, B9, C9, D9 unterscheiden sich bezüglich ihrer Form und teilweise bezüglich ihres Materials. Aus den vier Blechen A9, B9, C9 und D9 wird analog zu den Ausführungen zu den Figuren 1a bis 1i durch Laserschneiden der Bleche A9, B9, C9, D9 und Laserschweißen der Bleche A9, B9, C9, D9 das Tailored Blank T9 hergestellt. Das Verfahren wird mit einer Vorrichtung 101 zur Herstellung von Tailored Blanks T9 ausgeführt.

Die in der Figuren 9 in schematischer Draufsicht gezeigte Vorrichtung 101 umfasst eine durch die Zeichnungsebene dargestellte Basis 102, fünf Spanneinrichtung 103-1 bis 103-5, und eine Lasereinrichtung 105. Die Spanneinrichtungen 103-1 bis 103-5 sind als magnetische Spanneinrichtungen ausgebildet. Alternativ ist es auch vorgesehenen, die Spanneinrichtungen als Vakuumspanneinrichtungen auszubilden. Die Spanneinrichtungen 103-1 bis 103-5 sind unabhängig voneinander auf der Basis 102 in der Zeichnungsebene in zwei Richtungen x, y verfahrbar. Zusätzlich ist auch die Verfahrbarkeit wenigstens einer der Spanneinrichtungen 103-1 bis 103-5 senkrecht zu der Zeichnungsebene in Richtung z vorgesehen. Die Lasereinrichtung 105 umfasst einen Kopf 106, in welchem ein Remote-Laser 107 aufgenommen ist. Hierbei ist der Kopf 106 relativ zu der Basis 102 in allen Raumrichtungen x, y, z verfahrbar. Hierbei ist weiterhin ein von dem Remote-Laser 107 erzeugter Laserstrahl 108 von dem Remote-Laser 107 lenkbar.

In der Darstellung der Figur 9 sind die Bleche A9, B9, C9, D9 bereits durch Laserschneiden bearbeitet. Hierdurch wurden an jedem der Bleche A9, B9, C9, D9 zwei zu verschweißende Kanten A9-1, A9-2, B9-1, B9-2, C9-1, C9-2, D9-1, D9-2 erzeugt. Durch eine Bewegen der einzelnen Blechen A9, B9, C9, D9 mittels der Spanneinrichtungen 103-1 bis 103-5 wurden die Bleche A9, B9, C9, D9 nacheinander oder gleichzeitig mit ihren korrespondierenden Kanten A9-2 und B9-1, B9-2 und C9-1, C9-2 und D9-1, D9-2 und A9-1 aufeinander ausgerichtet, um einen Ring R9 zu bilden. Die Kantenpaare A9-2, B9-1 und B9-2, C9-1 und C9-2, D9-1 sind bereits durch den Remote-Laser 107 verschweißt, so dass die Bleche A9 und B9 durch eine erste Schweißnaht AB9, die Bleche B9 und C9 durch eine zweite Schweißnaht BC9 und die Bleche C9 und D9 durch eine dritte Schweißnaht CD9 verbunden sind. Eine vierte Schweißnaht DA9 zur Verbindung des Kantenpaars D9-2, A9-1 wird in der Darstellung der Figur 9 gerade durch den Laserstrahl 108 des Remote-Lasers 107 erzeugt.

Sowohl das Laserschneiden, als auch das Laserschweißen wird an allen Blechen A9, B9, C9 und D9 durch ein und denselben Remote-Laser 107 ausgeführt. Selbstverständlich können mit diesem Verfahren auch mehr als vier Bleche zu einem Ring verbunden werden. Die Vorrichtung ist dann mit einer ausreichenden Zahl von Spanneinrichtungen ausgestattet. Bei größeren Blechen kann es auch vorgesehen sein, diese mit wenigstens zwei Spanneinrichtungen zu spannen, wie dies in der Figur 9 für das Blech B9 gezeigt ist. Weiterhin ist es auch vorgesehen, ein ringförmig geschlossene Tailored Blank aus nur zwei oder aus nur drei Blechen herzustellen.

Weiterhin ist es bei den beschriebenen grundsätzlich als Alternative auch vorgesehen, dass statt des Remote-Lasers ein herkömmlicher Laser werwendet wird.

### Bezugszeichenliste:

- 1: Vorrichtung
- 2: Basis
- 3: erste Spanneinrichtung
- 3a, 3b: Spannbacke von 3
- 4: zweite Spanneinrichtung
- 4a, 4b: Spanneinrichtung von 4
- 5: Lasereinrichtung
- 6: Kopf von 5
- 7: Remote-Laser in 6
- 8: Laserstrahl
- 9, 9.1--9.8: zu verschweißende Kante von A
- 10, 10.1-10.8: zu verschweißende Kante von B
- 11: Stoßbereich
- 12, 12.1-12.5, 12.7,12.8: Schweißnaht
- 13, 13.1-13.4: Stoß
- 14: Zusatzdraht
- 15, 15.1-15.7: Oberseite von A
- 16, 16.1-16.8: Oberseite von B
- 17.1-17.4: Schnittfläche an A1-A4
- 18.1-18.4: Schnittfläche an B1-B4
- 19.8: Unterseite von A8
- 20.8: Unterseite von B8

- 101: weitere Vorrichtung
- 102: Basis
- 103-1 bis 103-5: Spanneinrichtung
- 105: Lasereinrichtung
- 106: Kopf von 5
- 107: Remote-Laser in 6
- 108: Laserstrahl
- A, A1-A9: erstes Blech
- B, B1-B9: zweites Blech
- C9: drittes Blech
- D9: viertes Blech
- E1-E4: erste Ebene
- F1-F4: zweite Ebene
- G1-G4: dritte Ebene
- H4: vierte Ebene
- I7: gemeinsame Ebene von 15.7 und 16.7
- I8: gemeinsame Ebene von 15.8 und 16.8
- N, N1-N8: Nut
- R9: Ring
- T, T1-T9: Tailored Blank

- A9-1; A9-2: Kante von A9
- B9-1; B9-2: Kante von B9
- C9-1, C9-2: Kante von C9
- D9-1, D9-2: Kante von D9
- AB9, BC9, CD9, DA9: Schweißnaht
- FV1-FV4; FV7, FV8: Freivolumen von N1-N4, N7, N8
- FV12.1-FV12.4: Füllvolumen von 12.1-12.4
- FV12.7, FV12.8: Füllvolumen von 12.7, 12.8
- GF1-GF4, GF7, GF8: Grenzfläche

- d7: Abstand zwischen 7 und 9 bzw. 10
- x, x', y, y', z, z': Raumrichtung

- α1-α4: Winkel zwischen 9.1-9.4 und 15.1-15.4
- β1-β4: Winkel zwischen 10.1-10.4 und 16.1-16.4

## Patentansprüche

1. Verfahren zum Stumpfschweißen von wenigstens zwei Blechen (A; A1-A9; B, B1-B9), nämlich einem ersten Blech (A; A1-A9) und einem zweiten Blech (B; B1-B9) , wobei aus diesen Blechen (A; A1-A9; B, B1-B9) insbesondere ein Tailored Blank (T; T1-T9) hergestellt wird,
- wobei in einem ersten Verfahrensschritt eine Fixierung des ersten Blechs (A; A1-A9) in einer ersten Spanneinrichtung (3; 103-1) und eine Fixierung des zweiten Blechs (B; B1-B9) in einer zweiten Spanneinrichtung (4; 103-2) durchgeführt wird,
- wobei in einem zweiten Verfahrensschritt an dem ersten Blech (A; A1-A9) eine erste zu verschweißenden Kante (9; 9.1-9.8; A9-1; B9-1; C9-1; D9-1) mittels Laserschneiden hergestellt wird,
- wobei in einem dritten Verfahrensschritt an dem zweiten Blech (B; B1-B9) eine zweite zu verschweißenden Kante (10; 10.1-10.8; A9-2; B9-2; C9-2; D9-2) mittels Laserschneiden hergestellt wird,
- wobei in einem vierten Verfahrensschritt das erste Blech (A; A1-A9) und das zweite Blech (B; B1-B9) zur Durchführung eines Fügeprozesses für ein Fügen zueinander positionier werden,
- wobei in einem fünften Verfahrensschritt das Fügen der beiden Bleche (A; A1-A9; B1; B1-B9) entlang eines durch die beiden Kanten (9; 9.1-9.8; A9-1; B9-1; C9-1; D9-1; 10; 10.1-10.8; A9-2; B9-2; C9-2; D9-2) gebildeten Stoßbereichs (11) mittels Laserschweißen ausgeführt wird,
**dadurch gekennzeichnet,**
- **dass** das erste Blech (A; A1-A9) und das zweite Blech (B; B1-B9) in dem vierten Verfahrensschritt jeweils unter Beibehaltung einer Vorspannung, welche durch die in dem ersten Verfahrensschritt hergestellte Fixierung hervorgerufen wird, entweder durch ein Bewegen der ersten Spanneinrichtung (3; 103-1) oder durch ein Bewegen der zweiten Spanneinrichtung (4; 103-2) oder durch ein Bewegen der ersten Spanneinrichtung (3; 103-1) und der zweiten Spanneinrichtung (4; 103-2) derart zueinander positioniert werden, dass sich die zu verschweißende Kante (9; 9.1-9.8; A9-1; B9-1; C9-1; D9-1) des ersten Blechs (A; A1-A9) und die zu verschweißende Kante (10; 10.1-10.8; A9-2; B9-2; C9-2; D9-2) des zweiten Blechs (B; B1-B9) unter Ausbildung eines Stoßes (13; 13.1-13.4) gegenüber liegen.

2. Verfahren nach Anspruch 1, **dadurch gekennzeichnet, dass** der zweite, der dritte und der vierte Verfahrensschritt derart ausgeführt werden, dass vor dem fünften Verfahrensschritt zwischen der zu verschweißenden ersten Kante (9; 9.1-9.8; A9-1; B9-1; C9-1; D9-1) und der zu verschweißenden zweiten Kante (10; 10.1-10.8; A9-2; B9-2; C9-2; D9-2) eine Nut (N; N1-N8) ausgebildet wird, wobei die Nut (N; N1-N8) vorzugsweise als eine V-Nut oder vorzugsweise als eine Y-Nut oder vorzugsweise als eine HV-Nut oder vorzugsweise als eine HY-Nut ausgebildet wird.

3. Verfahren nach Anspruch 1 oder 2, **dadurch gekennzeichnet,**
- **dass** bei dem zweiten Verfahrensschritt die Vorbereitung der ersten zu verschweißenden Kante (9; 9.1-9.8; A9-1; B9-1; C9-1; D9-1) mittels des Laserschneidens derart erfolgt, dass nach dem Laserschneiden zwischen der ersten Kante (9; 9.1-9.8; A9-1; B9-1; C9-1; D9-1) und einer an die erste Kante (9; 9.1-9.8; A9-1; B9-1; C9-1; D9-1) angrenzenden Oberseite (15; 15.1-15.8) des ersten Blechs (A; A1-A9) ein Winkel α > 90° eingeschlossen wird,
- **dass** bei dem dritten Verfahrensschritt die Vorbereitung der zweiten zu verschweißenden Kante (10; 10.1-10.8; A9-2; B9-2; C9-2; D9-2) mittels des Laserschneidens derart erfolgt, dass nach dem Laserschneiden zwischen der zweiten Kante (10; 10.1-10.8; A9-2; B9-2; C9-2; D9-2) und einer an die zweite Kante (10; 10.1-10.8; A9-2; B9-2; C9-2; D9-2) angrenzenden Oberseite (16; 16.1-16.8) des zweiten Blechs (B; B1-B9) ein Winkel β > oder = 90° eingeschlossen wird.

4. Verfahren nach einem der vorhergehenden Ansprüche 1 bis 3, **dadurch gekennzeichnet, dass** nach dem vierten Verfahrensschritt das erste Blech (A; A1-A9) und das zweite Blech (B; B1-B9) derart orientiert sind, dass eine an der ersten Kante (9; 9.1-9.8; A9-1; B9-1; C9-1; D9-1) erzeugte erste Schnittfläche (17.1-17.4) in einer ersten Ebene (E1-E4) liegt und eine an der zweiten Kante (10; 10.1-10.8; A9-2; B9-2; C9-2; D9-2) erzeugte zweite Schnittfläche (18..1-18.4) in einer zweiten Ebene (F1-F4) liegt, wobei sich die erste Ebene (E1-E4) und die zweite Ebene (F1-F4) schneiden, wenn eine Oberseite (15; 15.1-15.8) des ersten Blechs (A; A1-A9) und eine Oberseite (16; 16.1-16.8) des zweiten Blechs (B; B1-B9) in einer dritte Ebene (G1-G3) oder in einer dritten Ebene (G4) und eine vierten Ebene (H4), welche parallelen zueinander ausgerichtet sind, liegen.

5. Verfahren nach einem der vorhergehenden Ansprüche 1 bis 4, **dadurch gekennzeichnet,**
- **dass** der zweite und der dritte Verfahrensschritt mittels Laser-Strahl-Schneiden oder mittels Remote-Laser-Strahl-Schneiden ausgeführt werden und
- **dass** der fünfte Verfahrensschritt mittels Laser-Strahl-Schweißen oder mittels Remote-Laser-Strahl-Schweißen ausgeführt wird,
- wobei vorzugsweise vorgesehen ist, dass der zweite, der dritte und der fünfte Verfahrensschritt mit demselben Laser oder mit demselben Remote-Laser (7; 107) ausgeführt werden.

6. Verfahren nach Anspruch 5, **dadurch gekennzeichnet, dass** ein Abstand (d7) zwischen dem Remote-Laser (7; 107) und der bzw. den zu verschweißenden Kanten (9; 9.1-9.8; A9-1; B9-1; C9-1; D9-1; 10.1; 10.1-10.8; A9-2; B9-2; C9-2; D9-2) der Bleche (A; A1-A9; B; B1-B9) bei der Ausführung des zweiten, dritten und fünften Verfahrensschritts jeweils mindestens 200 mm und vorzugsweise mindestens 300 mm beträgt.

7. Verfahren nach einem der vorhergehenden Ansprüche 1 bis 6, **dadurch gekennzeichnet, dass** das erste Blech (A; A1-A9) im Bereich seiner ersten zu verschweißenden Kante (9; 9.1-9.8; A9-1; B9-1; C9-1; D9-1) und/oder das zweite Blech (B; B1-B9) im Bereich seiner zweiten zu verschweißenden Kante (10: 10.1-10.8; A9-2; B9-2; C9-2; D9-2) vor dem fünften Verfahrensschritt und insbesondere vor den zweiten bzw. dritten Verfahrensschritt durch Laserablation mittels des Remote-Lasers (7; 107) behandelt wird.

8. Verfahren nach einem der vorhergehenden Ansprüche 1 bis 7, **dadurch gekennzeichnet, dass** die Bleche (A9, B9, C9, D9) in ihrer Anzahl und in ihrer Form derart ausgebildet sind, dass durch das Verfahren ein ringförmig geschlossenes Tailored Blank (T9) hergestellt wird, wobei das ringförmig geschlossene Tailored Blank (T9) insbesondere aus wenigstens vier und vorzugsweise wenigstens sechs Blechen (A9, B9, C9, D9) hergestellt wird.

9. Verfahren nach einem der vorhergehenden Ansprüche 1 bis 8, **dadurch gekennzeichnet, dass** in dem vierten Verfahrensschritt das zweite Blech (B7; B8) wahlweise derart gegenüber dem ersten Blech (A7; A8) positioniert wird,
- dass zur Herstellung einer ersten Variante des Tailored Blanks (T7) eine Oberseite (15.7) des ersten Blechs (A7) und eine Oberseite (16.7) des zweiten Blechs (B7) in eine erste gemeinsame Ebene (I7) gebracht werden und die Nut (N7) hierbei zu der Oberseite (16.7) des zweiten Blechs (B7) hin ausgebildet wird oder
- dass zur Herstellung einer zweiten Variante des Tailored Blanks (T8) eine Unterseite (19.8) des ersten Blechs (B8) und eine Unterseite (20.8) des zweiten Blechs (B8) in eine zweite gemeinsame Ebene (I8) gebracht werden und die Nut (N8) hierbei zu der Oberseite (16.8) des zweiten Blechs (B8) hin ausgebildet wird.

10. Verfahren nach einem der vorhergehenden Ansprüche 1 bis 9, **dadurch gekennzeichnet, dass** ein Freivolumen (FV1-FV4; FV7; FV8) der Nut (N1-N4; N7; N8) derart vorbestimmt wird, dass dieses durch eine Schweißnaht (12.1-12.4; 12.7; 12.8), welche in dem fünften Verfahrensschritt erzeugt wird, bis zu einer Grenzfläche (GF1-GF4; GF7; GF8) gefüllt wird,
- wobei die Grenzfläche (GF1-GF3; GF7) bei Blechen (A1; A2; A3; A7; B1; B2; B3; B7), deren Oberseiten (15.1; 15.2; 15.3; 15.7; 16.1; 16.2; 16.3; 16.7) in einer gemeinsamen Ebene (G1;G2; G3; I7) liegen, durch diese gemeinsame Ebene (G1; G2; G3; I7) definiert wird und wobei die Nut (N1; N2; N3; N7) derart gefüllt wird, dass ein Füllvolumen (FV12.1; FV12.2; FV12.3; FV12.7) der Schweißnaht (12.1; 12.2; 12.3; 12.7) dem Freivolumen (FV1-FV3; FV7) der Nut (N1; N2; N3; N7) entspricht oder
- wobei die Grenzfläche (GF4; GF8) bei Blechen (A4; A8; B4; B8), deren Oberseiten (15.4; 15.8; 16.4; 16.8) auf unterschiedlichem Niveau liegen, als Grenzfläche (GF4; GF8) ausgebildet ist, welche sich konkav gewölbt von der Oberseite (15.4; 15.8) des ersten Blechs (A4; A8) zu der Oberseite (16.4 16.8) des zweiten Blechs (A8; B8) erstreckt, und wobei die Nut (N4; N8) derart gefüllt wird, dass ein Füllvolumen (FV12.4; FV12.8) der Schweißnaht (12.4; 12.8) über dem Freivolumen (FV4; FV8) der Nut (N4; N8) liegt.

11. Verfahren nach Anspruch 10, **dadurch gekennzeichnet, dass** ein Füllvolumen (FV12.7; FV12.8) der Schweißnaht (12.7; 12.8) im fünften Verfahrensschritt durch kontinuierliches Zuführen eines Zusatzdrahts (14) während des Laserschweißens erhöht wird bis von dem Füllvolumen (FV12.7; FV12.8) das Freivolumen (FV7; FV8) der Nut (N7; N8) erreicht wird.

12. Verfahren nach einem der vorhergehenden Ansprüche, **dadurch gekennzeichnet, dass** mehrere Bleche (A9; B9; C9; D9) zu einem Ring (R9) verbunden werden, wobei diese Bleche (A9; B9; C9; D9) hierzu durch eine Anzahl von Schweißnähten (AB9; BC9; CD9; DA9) verbunden werden, welche einer Anzahl der Bleche (A9; B9; C9; D9) entspricht.

13. Verfahren nach einem der vorhergehenden Ansprüche 1 bis 12, **dadurch gekennzeichnet,**
- **dass** die erste zu verschweißende Kante (9; 9.1-9.4) und die zweite zu verschweißende Kante (10; 10.1-10.4) jeweils einen linearen Verlauf aufweisen, so dass durch das Verschweißen eine linear verlaufende Schweißnaht (12; 12.1-12.4) gebildet wird.

14. Verfahren nach einem der vorhergehenden Ansprüche 1 bis 12, **dadurch gekennzeichnet,**
- **dass** die erste zu verschweißende Kante (9.5) und die zweite zu verschweißende Kante (10.5) jeweils einen zweidimensionalen, kurvenartigen Verlauf aufweisen, so dass durch das Verschweißen eine zweidimensional, kurvenartig verlaufende Schweißnaht (12.5) gebildet wird.

15. Verfahren nach einem der vorhergehenden Ansprüche 1 bis 12, **dadurch gekennzeichnet,**
- **dass** die erste zu verschweißende Kante (9.6) und die zweite zu verschweißende Kante (10.6) jeweils einen raumkurvenartigen Verlauf aufweisen, so dass durch das Verschweißen eine raumkurvenartig verlaufende Schweißnaht gebildet wird.

## Claims

1. Method for the butt-welding of at least two metal sheets (A; A1-A9; B, B1-B9), namely a first metal sheet (A; A1-A9) and a second metal sheet (B; B1-B9), wherein in particular a tailored blank (T; T1-T9) is produced from these metal sheets (A; A1-A9; B, B1-B9),
- wherein, in a first method step, the first metal sheet (A; A1-A9) is fixed in a first clamping device (3; 103-1) and the second metal sheet (B; B1-B9) is fixed in a second clamping device (4; 103-2),
- wherein, in a second method step, a first edge to be welded (9; 9.1-9.8; A9-1; B9-1; C9-1; D9-1) is produced on the first metal sheet (A; A1-A9) by means of laser cutting,
- wherein, in a third method step, a second edge to be welded (10; 10.1-10.8; A9-2; B9-2; C9-2; D9-2) is produced on the second metal sheet (B; B1-B9) by means of laser cutting,
- wherein, in a fourth method step, the first metal sheet (A; A1-A9) and the second metal sheet (B; B1-B9) are positioned relative to one another for carrying out a joining process for joining,
- wherein, in a fifth method step, the two metal sheets (A; A1-A9; B1; B1-B9) are joined along an abutting region (11), formed by the two edges (9; 9.1-9.8; A9-1; B9-1; C9-1; D9-1; 10; 10.1-10.8; A9-2; B9-2; C9-2; D9-2), by means of laser welding,
**characterized**
- **in that**, in the fourth method step, the first metal sheet (A; A1-A9) and the second metal sheet (B; B1-B9) are positioned relative to one another, in each case while maintaining a preload brought about by the fixing produced in the first method step, either by moving the first clamping device (3; 103-1) or by moving the second clamping device (4; 103-2) or by moving the first clamping device (3; 103-1) and the second clamping device (4; 103-2), in such a way that the edge to be welded (9; 9.1-9.8; A9-1; B9-1; C9-1; D9-1) of the first metal sheet (A; A1-A9) and the edge to be welded (10; 10.1-10.8; A9-2; B9-2; C9-2; D9-2) of the second metal sheet (B; B1-B9) lie opposite one another so as to form a joint (13; 13.1-13.4) .

2. Method according to Claim 1, **characterized in that** the second, the third and the fourth method step are carried out in such a way that, prior to the fifth method step, a groove (N; N1-N8) is formed between the first edge to be welded (9; 9.1-9.8; A9-1; B9-1; C9-1; D9-1) and the second edge to be welded (10; 10.1-10.8; A9-2; B9-2; C9-2; D9-2), wherein the groove (N; N1-N8) is preferably in the form of a V groove or preferably in the form of a Y groove or preferably in the form of an HV groove or preferably in the form of an HY groove.

3. Method according to Claim 1 or 2, **characterized**
- **in that**, during the second method step, the first edge to be welded (9; 9.1-9.8; A9-1; B9-1; C9-1; D9-1) is prepared by means of laser cutting in such a way that, after the laser cutting, an angle α > 90° is enclosed between the first edge (9; 9.1-9.8; A9-1; B9-1; C9-1; D9-1) and a top side (15; 15.1-15.8) of the first metal sheet (A; A1-A9), said top side adjoining the first edge (9; 9.1-9.8; A9-1; B9-1; C9-1; D9-1),
- **in that**, during the third method step, the second edge to be welded (10; 10.1-10.8; A9-2; B9-2; C9-2; D9-2) is prepared by means of laser cutting in such a way that, after the laser cutting, an angle β > or = 90° is enclosed between the second edge (10; 10.1-10.8; A9-2; B9-2; C9-2; D9-2) and a top side (16; 16.1-16.8) of the second metal sheet (B; B1-B9), said top side adjoining the second edge (10; 10.1-10.8; A9-2; B9-2; C9-2; D9-2).

4. Method according to one of the preceding Claims 1 to 3, **characterized in that**, after the fourth method step, the first metal sheet (A; A1-A9) and the second metal sheet (B; B1-B9) are oriented in such a way that a first cut surface (17.1-17.4) generated at the first edge (9; 9.1-9.8; A9-1; B9-1; C9-1; D9-1) lies in a first plane (E1-E4) and a second cut surface (18.1-18.4) generated at the second edge (10; 10.1-10.8; A9-2; B9-2; C9-2; D9-2) lies in a second plane (F1-F4), wherein the first plane (E1-E4) and the second plane (F1-F4) intersect when a top side (15; 15.1-15.8) of the first metal sheet (A; A1-A9) and a top side (16; 16.1-16.8) of the second metal sheet (B; B1-B9) lie in a third plane (G1-G3) or in a third plane (G4) and a fourth plane (H4), which are oriented parallel to one another.

5. Method according to one of the preceding Claims 1 to 4, **characterized**
- **in that** the second and the third method step are carried out by means of laser beam cutting or by means of remote laser beam cutting, and
- **in that** the fifth method step is carried out by means of laser beam welding or by means of remote laser beam welding,
- wherein it is preferably provided that the second, the third and the fifth method step are carried out using the same laser or using the same remote laser (7; 107).

6. Method according to Claim 5, **characterized in that** a spacing (d7) between the remote laser (7; 107) and the edge or edges to be welded (9; 9.1-9.8; A9-1; B9-1; C9-1; D9-1; 10.1; 10.1-10.8; A9-2; B9-2; C9-2; D9-2) of the metal sheets (A; A1-A9; B; B1-B9) when the second, third and fifth method steps are being carried out is in each case at least 200 mm and preferably at least 300 mm.

7. Method according to one of the preceding Claims 1 to 6, **characterized in that** the first metal sheet (A; A1-A9), in the region of its first edge to be welded (9; 9.1-9.8; A9-1; B9-1; C9-1; D9-1), and/or the second metal sheet (B; B1-B9), in the region of its second edge to be welded (10: 10.1-10.8; A9-2; B9-2; C9-2; D9-2), are/is treated by laser ablation by means of the remote laser (7; 107) prior to the fifth method step and in particular prior to the second and third method step, respectively.

8. Method according to one of the preceding Claims 1 to 7, **characterized in that** the metal sheets (A9, B9, C9, D9) are configured in terms of their number and shape in such a way that a tailored blank (T9) closed in a ring-shaped manner is produced by the method, wherein the tailored blank (T9) closed in a ring-shaped manner is produced in particular from at least four and preferably at least six metal sheets (A9, B9, C9, D9).

9. Method according to one of the preceding Claims 1 to 8, **characterized in that**, in the fourth method step, the second metal sheet (B7; B8) is positioned in relation to the first metal sheet (A7; A8) either in such a way
- that, to produce a first variant of the tailored blank (T7), a top side (15.7) of the first metal sheet (A7) and a top side (16.7) of the second metal sheet (B7) are brought into a first common plane (I7) and the groove (N7) is in this case formed in the direction of the top side (16.7) of the second metal sheet (B7), or in such a way
- that, to produce a second variant of the tailored blank (T8), a bottom side (19.8) of the first metal sheet (B8) and a bottom side (20.8) of the second metal sheet (B8) are brought into a second common plane (18) and the groove (N8) is in this case formed in the direction of the top side (16.8) of the second metal sheet (B8).

10. Method according to one of the preceding Claims 1 to 9, **characterized in that** a free volume (FV1-FV4; FV7; FV8) of the groove (N1-N4; N7; N8) is predetermined in such a way that said free volume is filled by a weld seam (12.1-12.4; 12.7; 12.8), which is generated in the fifth method step, as far as an interface (GF1-GF4; GF7; GF8),
- wherein the interface (GF1-GF3; GF7) in the case of metal sheets (A1; A2; A3; A7; B1; B2; B3; B7) whose top sides (15.1; 15.2; 15.3; 15.7; 16.1; 16.2; 16.3; 16.7) lie in a common plane (G1; G2; G3; I7) is defined by this common plane (G1; G2; G3; I7), and wherein the groove (N1; N2; N3; N7) is filled in such a way that a fill volume (FV12.1; FV12.2; FV12.3; FV12.7) of the weld seam (12.1; 12.2; 12.3; 12.7) corresponds to the free volume (FV1-FV3; FV7) of the groove (N1; N2; N3; N7), or
- wherein the interface (GF4; GF8) in the case of metal sheets (A4; A8; B4; B8) whose top sides (15.4; 15.8; 16.4; 16.8) lie at different levels is in the form of an interface (GF4; GF8) which extends from the top side (15.4; 15.8) of the first metal sheet (A4; A8) to the top side (16.4 16.8) of the second metal sheet (A8; B8) in a concavely curved manner, and wherein the groove (N4; N8) is filled in such a way that a fill volume (FV12.4; FV12.8) of the weld seam (12.4; 12.8) lies above the free volume (FV4; FV8) of the groove (N4; N8).

11. Method according to Claim 10, **characterized in that** a fill volume (FV12.7; FV12.8) of the weld seam (12.7; 12.8) in the fifth method step is increased by continuous feeding of a filler wire (14) during the laser welding until the free volume (FV7; FV8) of the groove (N7; N8) is reached by the fill volume (FV12.7; FV12.8).

12. Method according to one of the preceding claims, **characterized in that** a plurality of metal sheets (A9; B9; C9; D9) are connected to form a ring (R9), wherein, for this purpose, these metal sheets (A9; B9; C9; D9) are connected by a number of weld seams (AB9; BC9; CD9; DA9) which corresponds to a number of the metal sheets (A9; B9; C9; D9).

13. Method according to one of the preceding Claims 1 to 12, **characterized**
- **in that** the first edge to be welded (9; 9.1-9.4) and the second edge to be welded (10; 10.1-10.4) each have a linear profile, such that a linearly running weld seam (12; 12.1-12.4) is formed by the welding.

14. Method according to one of the preceding Claims 1 to 12, **characterized**
- **in that** the first edge to be welded (9.5) and the second edge to be welded (10.5) each have a two-dimensional, curved profile, such that a weld seam (12.5) which runs in a two-dimensional, curved manner is formed by the welding.

15. Method according to one of the preceding Claims 1 to 12, **characterized**
- **in that** the first edge to be welded (9.6) and the second edge to be welded (10.6) each have a three-dimensionally curved profile, such that a weld seam which runs in a three-dimensionally curved manner is formed by the welding.

## Revendications

1. Procédé de soudage bout à bout d'au moins deux tôles (A ; A1-A9 ; B, B1-B9), à savoir une première tôle (A ; A1-A9) et une deuxième tôle (B ; B1-B9), notamment une ébauche sur mesure (T ; T1-T9) étant réalisée à partir de ces tôles (A ; A1-A9 ; B, B1-B9),
- dans une première étape de procédé, la première tôle (A ; A1-A9) étant fixée dans un premier dispositif de serrage (3 ; 103-1) et la deuxième tôle (B ; B1-B9) étant fixée dans un deuxième dispositif de serrage (4 ; 103-2),
- dans une deuxième étape de procédé, un premier bord à souder (9 ; 9.1-9.8 ; A9-1 ; B9-1 ; C9-1 ; D9-1) étant réalisé sur la première tôle (A ; A1-A9) par découpe au laser,
- dans une troisième étape de procédé, un deuxième bord à souder (10 ; 10.1-10.8 ; A9-2 ; B9-2 ; C9-2 ; D9-2) étant réalisé sur la deuxième tôle (B ; B1-B9) par découpe au laser,
- dans une quatrième étape de procédé, la première tôle (A ; A1-A9) et la deuxième tôle (B ; B1-B9) étant positionnées l'une par rapport à l'autre afin de procéder à un processus d'assemblage,
- dans une cinquième étape de procédé, les deux tôles (A ; A1-A9 ; B1 ; B1-B9) étant assemblées le long d'une zone d'aboutement formée par les deux bords (9 ; 9.1-9.8 ; A9-1 ; B9-1 ; C9-1 ; D9-1 ; 10 ; 10.1-10.8 ; A9-2 ; B9-2 ; C9-2 ; D9-2) par soudage au laser,
**caractérisé en ce que**
- la première tôle (A ; A1-A9) et la deuxième tôle (B ; B1-B9) dans la quatrième étape de procédé sont positionnées l'une par rapport à l'autre, à chaque fois avec maintien d'une précontrainte qui est provoquée par la fixation effectuée dans la première étape de procédé, par déplacement du premier dispositif de serrage (3 ; 103-1) ou par déplacement du deuxième dispositif de serrage (4 ; 103-2) ou par déplacement du premier dispositif de serrage (3 ; 103-1) et du deuxième dispositif de serrage (4 ; 103-2) de manière à ce que le bord à souder (9 ; 9.1-9.8 ; A9-1 ; B9-1 ; C9-1 ; D9-1) de la première tôle (A ; A1-A9) et le bord à souder (10 ; 10.1-10.8 ; A9-2 ; B9-2 ; C9-2 ; D9-2) de la deuxième tôle (B ; B1-B9) soient situés l'un en face de l'autre en formant un aboutement (13 ; 13.1-13.4) .

2. Procédé selon la revendication 1, **caractérisé en ce que** les deuxième, troisième et quatrième étapes de procédé sont réalisées de manière à ce que, avant la cinquième étape de procédé, une rainure (N ; N1-N8) est formée entre le premier bord à souder (9 ; 9.1-9.8 ; A9-1 ; B9-1 ; C9-1 ; D9-1) et le deuxième bord à souder (10 ; 10.1-10.8 ; A9-2 ; B9-2 ; C9-2 ; D9-2), la rainure (N ; N1-N8) étant de préférence réalisée sous la forme d'une rainure en V ou de préférence sous la forme d'une rainure en Y ou de préférence sous la forme d'une rainure en HV ou de préférence sous la forme d'une rainure en HY.

3. Procédé selon la revendication 1 ou 2, **caractérisé en ce que**
- dans la deuxième étape de procédé, la préparation du premier bord à souder (9 ; 9.1-9.8 ; A9-1 ; B9-1 ; C9-1 ; D9-1) est effectuée par découpe au laser de manière à ce que, après la découpe au laser, un angle α > 90° soit compris entre le premier bord (9 ; 9.1-9.8 ; A9-1 ; B9-1 ; C9-1 ; D9-1) et une face supérieure (15 ; 15,1-15,8) de la première tôle (A ; A1-A9, laquelle face supérieure est adjacente au premier bord (9 ; 9.1-9.8 ; A9-1 ; B9-1 ; C9-1 ; D9-1),
- dans la troisième étape de procédé, la préparation du deuxième bord à souder (10 ; 10.1-10.8 ; A9-2 ; B9-2 ; C9-2 ; D9-2) est effectuée par découpe au laser de manière à ce que, après la découpe au laser, un angle β > ou = 90° soit formé entre le deuxième bord (10 ; 10.1-10.8 ; A9-2 ; B9-2 ; C9-2 ; D9-2) et une face supérieure (16 ; 16,1-16,8) de la deuxième tôle (B ; B1-B9), laquelle face supérieure est adjacente au deuxième bord (10 ; 10.1-10.8 ; A9-2 ; B9-2 ; C9-2 ; D9-2) .

4. Procédé selon l'une des revendications précédentes 1 à 3, **caractérisé en ce que**, après la quatrième étape de procédé, la première tôle (A ; A1-A9) et la deuxième tôle (B ; B1-B9) sont orientées de manière à ce qu'une première surface de coupe, générée sur le premier bord (9 ; 9.1-9.8 ; A9-1 ; B9-1 ; C9-1; D9-1) soit située dans un premier plan (E1-E4) et une deuxième surface de coupe (17.1-17.4), générée sur le deuxième bord (10 ; 10.1-10.8 ; A9-2 ; B9-2 ; D9-2) soit située dans un deuxième plan (F1-F4), le premier plan (E1-E4) et le deuxième plan (F1-F4) se coupant lorsqu'une face supérieure (15 ; 15.1-15.8) de la première tôle (A ; A1-A9) et une face supérieure (16 ; 16.1-16.8) de la deuxième tôle (B ; B1-B9) se coupent dans un troisième plan (G1-G3) ou dans un troisième plan (G4) et un quatrième plan (H4), qui sont orientés parallèlement l'un à l'autre.

5. Procédé selon l'une des revendications précédentes 1 à 4, **caractérisé en ce que**
- les deuxième et troisième étapes de procédé sont réalisées par découpe au faisceau laser ou par découpe au faisceau laser distant et
- la cinquième étape de procédé est réalisée par soudage au faisceau laser ou par soudage au faisceau laser distant, les deuxième, troisième et cinquième étapes de procédé étant de préférence prévues pour être réalisées avec le même laser ou avec le même laser distant (7 ; 107).

6. Procédé selon la revendication 5, **caractérisé en ce qu'**une distance (d7) entre le laser distant (7 ; 107) et le ou les bords à souder (9 ; 9.1-9.8 ; A9-1 ; B9-1 ; C9-1 ; D9-1 ; 10.1 ; 10.1-10.8 ; A9-2 ; B9-2 ; C9-2 ; D9-2) des tôles (A ; A1-A9 ; B ; B1-B9), lors de la réalisation des troisième et cinquième étapes de procédé, est à chaque fois d'au moins 200 mm et de préférence d'au moins 300 mm.

7. Procédé selon l'un des revendications précédentes 1 à 6, **caractérisé en ce que** la première tôle (A ; A1-A9) dans la zone de son premier bord à souder (9 ; 9.1-9.8 ; A9-1 ; B9-1 ; C9-1 ; D9-1) et/ou la deuxième tôle (B ; B1-B9) dans la zone de son deuxième bord à souder (10 ; 10.1-10.8 ; A9-2 ; B9-2 ; C9-2 ; D9-2) sont traitées par ablation au laser au moyen du laser distant (7 ; 107) avant la cinquième étape de procédé et en particulier avant la deuxième ou la troisième étape de procédé.

8. Procédé selon l'un des revendications précédentes 1 à 7, **caractérisé en ce que** les tôles (A9, B9, C9, D9) sont conçues quant à leur nombre et leur forme de manière à réaliser une ébauche sur mesure (T9), fermée en forme d'anneau, par le procédé, l'ébauche sur mesure (T9), fermée en forme d'anneau, étant réalisée en particulier à partir d'au moins quatre, de préférence d'au moins six, tôles (A9, B9, C9, D9).

9. Procédé selon l'une des revendications précédentes 1 à 8, **caractérisé en ce que**
dans la quatrième étape de procédé la deuxième tôle (B7 ; B8) est éventuellement positionnée par rapport à la première tôle (A7 ; A8) de manière à ce que
- pour réaliser une première variante de l'ébauche sur mesure (T7), une face supérieure (15.7) de la première tôle (A7) et une face supérieure (16.7) de la deuxième tôle (B7) soient amenées dans un premier plan commun (I7) et la rainure (N7) soit formée en direction de la face supérieure (16.7) de la deuxième tôle (B7) ou
- pour réaliser une deuxième variante de l'ébauche sur mesure (T8) une face inférieure (19.8) de la première tôle (B8) et une face inférieure (20.8) de la deuxième tôle (B8) soient amenées dans un deuxième plan commun (I8) et la rainure (N8) soit formée en direction de la face supérieure (16.8) de la deuxième tôle (B8).

10. Procédé selon l'une des revendications précédentes 1 à 9, **caractérisé en ce que**
un volume libre (FV1-FV4 ; FV7 ; FV8) de la rainure (N1-N4 ; N7 ; N8) est prédéterminé de manière à ce que ledit volume libre soit rempli par un cordon de soudure (12.1-12.4; 12.7 ; 12.8) qui est généré dans la cinquième étape de procédé, jusqu'à une surface limite (GF1-GF4 ; GF7 ; GF8),
- la surface limite (GF1-GF3 ; GF7) pour les tôles (A1 ; A2 ; A3 ; A7 ; B1 ; B2 ; B3 ; B7) dont les faces supérieures (15.1 ; 15.2 ; 15.3 ; 15.7 ; 16.1 ; 16.2 ; 16.3 ; 16.7) sont situées dans un plan commun (G1 ; G2 ; G3 ; I7), étant définie par ce plan commun (G1 ; G2 ; G3 ; I7) et la rainure (N1 ; N2 ; N3 ; N7) étant remplie de manière à ce qu'un volume de remplissage (FV12.1; FV12.2 ; FV12.3 ; FV12.7) du cordon de soudure (12.1; 12.2 ; 12.3 ; 12.7) corresponde au volume libre (FV1-FV3 ; FV7) de la rainure (N1 ; N2 ; N3 ; N7) ou
- la surface limite (GF4 ; GF8) pour des tôles (A4 ; A8 ; B4 ; B8) dont les faces supérieures (15.4 ; 15.8 ; 16.4 ; 16.8) sont situées à un niveau différent étant conçue comme une surface limite (GF4 ; GF8) qui s'étend de manière concave de la face supérieure (15.4 ; 15.8) de la première tôle (A4 ; A8) à la face supérieure (16.4-16.8) de la deuxième tôle (A8 ; B8), et la rainure étant remplie de manière à ce qu'un volume de remplissage (FV12.4 ; FV12.8) du cordon de soudure (12.4 ; 12.8) soit situé au-dessus du volume libre (FV4 ; FV8) de la rainure (N4 ; N8).

11. Procédé selon la revendication 10, **caractérisé en ce qu'**un volume de remplissage (FV12.7 ; FV12.8) du cordon de soudure (12.7 ; 12.8) est augmenté dans la cinquième étape de procédé par apport continu d'un fil d'apport (14) pendant le soudage au laser jusqu'à ce que le volume libre (FV7 ; FV8) de la rainure (N7 ; N8) soit atteint par le volume de remplissage (FV12.7 ; FV12.8) .

12. Procédé selon l'une des revendications précédentes, **caractérisé en ce que** plusieurs tôles (A9 ; B9 ; C9 ; D9) sont reliées pour former un anneau (R9), ces tôles (A9 ; B9 ; C9 ; D9) étant pour cela reliées par un nombre de cordons de soudure (AB9 ; BC9 ; CD9 ; DA9) qui correspond à un nombre de tôles (A9 ; B9 ; C9 ; D9).

13. Procédé selon l'une des revendications précédentes 1 à 12, **caractérisé en ce que**
- le premier bord à souder (9 ; 9.1-9.4) et le deuxième bord à souder (10 ; 10.1-10.4) présentent chacun un tracé linéaire de sorte qu'un cordon de soudure linéaire (12 ; 12.1 à 12.4) soit formé par le soudage.

14. Procédé selon l'une des revendications précédentes 1 à 12, **caractérisé en ce que**
- le premier bord à souder (9.5) et le deuxième bord à souder (10.5) présentent chacun un tracé bidimensionnel en forme de courbe de sorte qu'un cordon de soudure bidimensionnel en forme de courbe (12.5) soit formé par le soudage.

15. Procédé selon l'une des revendications précédentes 1 à 12, **caractérisé en ce que**
- le premier bord à souder (9.6) et le deuxième bord à souder (10.6) présentent chacun un tracé en forme de courbe gauche de sorte qu'un cordon de soudure en forme de courbe gauche soit formé par le soudage.
